# EUROPEAN PATENT SPECIFICATION

(11) **EP 3 988 326 B1**
(45) Date of publication and mention of the grant of the patent: **25.02.2026**
(21) Application number: 19933917.7
(22) Date of filing: 11.12.2019
(51) Int. Cl.: B60C 1/00, C08L 7/00, C08L 9/00, C08L 9/06, C08L 21/00

(54) **RUBBER COMPOSITION FOR BASE TREAD AND TIRE**
KAUTSCHUKZUSAMMENSETZUNG FÜR BASISLAUFFLÄCHE UND REIFEN
COMPOSITION DE CAOUTCHOUC POUR BASE DE BANDE DE ROULEMENT ET PNEUMATIQUE

(30) Priority: 20.06.2019 JP 2019114835
(43) Date of publication of application: 27.04.2022
(73) Proprietor: BRIDGESTONE CORPORATION, Chuo-ku Tokyo 104-8340 (JP)
(72) Inventor: KAWASHIMA, Keisuke, Tokyo 104-8340 (JP); NUKUI, Noritoshi, Tokyo 104-8340 (JP)
(74) Representative: Marks & Clerk LLP
(86) International application number: PCT/JP2019/048441
(87) International publication number: WO 2020/255450

(56) References cited:
- EP-A1- 2 424 740
- EP-A1- 3 222 440
- EP-A1- 3 279 011
- WO-A1-2008/054023
- WO-A1-2015/182078
- WO-A1-2016/098505
- JP-A- 2001 171 316
- JP-A- 2011 122 024
- JP-A- H01 174 547
- JP-A- H03 119 041
- US-A1- 2008 097 024
- US-A1- 2008 097 024

## Description

### TECHNICAL FIELD

This disclosure relates to a rubber composition for base tread and a tire.

### BACKGROUND

From the viewpoint of improving the fuel efficiency of vehicles (achieving low fuel consumption), there are known technologies for optimizing rubber members (base tread) forming a base portion of tread of a tire.

For example, JP2016006135A (PTL 1) describes a technology for applying a rubber composition, which obtains improved low heat generating properties (low tanδ) by adjusting rubber components and filler, to a base tread.

However, when the tanδ (tangent loss) of the rubber composition is kept low as in the base tread described in PTL 1, there is a problem that the noise generated from tires as the vehicle passes (pass-by noise) deteriorates, although the rolling resistance and the fuel efficiency can be improved.

Therefore, it has been desired to develop a base tread which is excellent in rolling resistance properties (can reduce rolling resistance) and can also improve pass-by noise.

Further reference may be made to disclosures in PTL2, PTL 3, PTL4, PTL5 and PTL6 of rubber compositions for a tread of a pneumatic tire.

### CITATION LIST

### Patent Literature

PTL 1: JP2016006135A
PTL 2: US 2008/097024 A1
PTL 3: EP 3 222 440 A1
PTL 4: JP H01 174547 A
PTL 5: US 2008/097024 A1
PTL 6: WO 2016/098505 A1

### SUMMARY

### (Technical Problem)

It could thus be helpful to provide a rubber composition for base tread which is excellent in rolling resistance properties and can improve pass-by noise when applying the rubber composition for base tread to a tire. It could also be helpful to provide a tire which is excellent in rolling resistance properties and can improve pass-by noise.

### (Solution to Problem)

We thus provide the following.

The rubber composition for base tread of the present disclosure is a rubber composition for a base tread of a tread portion of a tire, where a ratio of tanδ at 0 °C to tanδ at 30 °C (0 °C tanδ/30 °C tanδ) is 2.90 or more,
wherein the conditions during the measurement of the 0 °C tanδ and the 30 °C tanδ are initial strain of 2%, dynamic strain of 1% and frequency of 10 Hz,
wherein a rubber component in the rubber composition comprises styrene-butadiene rubber having a styrene content of 26 mass% or more, natural rubber and butadiene rubber.

By having the above configuration, it is possible to achieve rolling resistance properties and improvement in pass-by noise when applying the rubber composition for base tread to a tire.

For the rubber composition for base tread of the present disclosure, the 0 °C tanδ/30 °C tanδ is preferably 3.0 or more. This is because in this way, it is possible to achieve even better rolling resistance properties and further improvement in pass-by noise at the same time when applying the rubber composition for base tread to a tire.

For the rubber composition for base tread of the present disclosure, the 30 °C tanδ is preferably 0.075 to 0.220. This is because in this way, it is possible to achieve even better rolling resistance properties and further improvement in pass-by noise at the same time when applying the rubber composition for base tread to a tire.

For the rubber composition for base tread of the present disclosure, the 0 °C tanδ is preferably 0.200 to 0.625. This is because in this way, it is possible to achieve even better rolling resistance properties and further improvement in pass-by noise at the same time when applying the rubber composition for base tread to a tire.

The rubber composition for base tread of the present disclosure contains styrene-butadiene rubber having a styrene content of 26 mass% or more and preferably contains styrene-butadiene rubber having a styrene content of 39 mass% or more, as a rubber component. This is because in this way, it is possible to more reliably achieve rolling resistance properties and improvement in pass-by noise when applying the rubber composition for base tread to a tire.

For the rubber composition for base tread of the present disclosure, the rubber component further contains natural rubber. This is because in this way, it is possible to more reliably achieve rolling resistance properties and improvement in pass-by noise when applying the rubber composition for base tread to a tire.

The rubber composition for base tread of the present disclosure further contains butadiene rubber. This is because in this way, it is possible to more reliably achieve rolling resistance properties and improvement in pass-by noise when applying the rubber composition for base tread to a tire.

For the rubber composition for base tread of the present disclosure, the content of the styrene-butadiene rubber in the rubber component is preferably 10 mass% to 80 mass%, more preferably 15 mass% to 60 mass%, and still more preferably 20 mass% to 45 mass%. This is because in this way, it is possible to more reliably achieve rolling resistance properties and improvement in pass-by noise when applying the rubber composition for base tread to a tire.

For the rubber composition for base tread of the present disclosure, the rubber component preferably contains 10 mass% to 75 mass% of the natural rubber and 10 mass% to 75 mass% of the butadiene rubber, and the rubber component more preferably contains 20 mass% to 70 mass% of the natural rubber and 10 mass% to 70 mass% of the butadiene rubber. This is because in this way, it is possible to more reliably achieve rolling resistance properties and improvement in pass-by noise when applying the rubber composition for base tread to a tire.

The tire of the present disclosure uses the rubber composition for base tread of the present disclosure described above for a base tread of a tread portion.

By having the above configuration, it is possible to achieve excellent rolling resistance properties and improvement in pass-by noise.

For the tire of the present disclosure, it is preferable to form a cap tread on the base tread in the tread portion of the tire, and a ratio of the storage modulus E'c of the cap tread to the storage modulus E'b of the base tread (E'c/ E'b) is preferably 0.25 to 0.75. This is because in this way, it is possible to further improve the balance between rolling resistance properties and pass-by noise of the tire.

### (Advantageous Effect)

According to the present disclosure, it is possible to provide a rubber composition for base tread which is excellent in rolling resistance properties and can improve pass-by noise when applying the rubber composition for base tread to a tire. Further, according to the present disclosure, it is possible to provide a tire which is excellent in rolling resistance properties and can improve pass-by noise.

### DETAILED DESCRIPTION

The following describes the rubber composition for base tread and the tire of the present disclosure in detail based on the embodiments thereof.

### <Rubber composition for base tread>

The rubber composition for base tread of the present disclosure is a rubber composition for a base tread of a tread portion of a tire.

The rubber composition for base tread of the present disclosure has a ratio of tanδ at 0 °C (0 °C tanδ) to tanδ at 30 °C (30 °C tanδ) (0 °C tanδ/30 °C tanδ) of 2.90 or more.

Normally, when tanδ is reduced, the rolling resistance of a tire can be improved, but there is a problem that the pass-by noise level deteriorates. On the other hand, when tanδ is increased, the pass-by noise level can be suppressed, but there is a problem that the rolling resistance deteriorates.

Therefore, the present disclosure focuses on the frequency region of tanδ, which affects rolling resistance and pass-by noise. It has been found that the rolling resistance tends to be improved by lowering low-frequency tanδ and that increasing high-frequency tanδ is preferable for improving the pass-by noise. Further, because it is difficult to measure high-frequency viscoelasticity due to the specifications of device, it is possible to improve the pass-by noise while obtaining excellent rolling resistance properties when the rubber composition is applied to a tire by increasing the ratio of tanδ at 0 °C to tanδ at 30 °C (specifically, by setting 0 °C tanδ/30 °C tanδ to 2.90 or more) according to temperature-frequency conversion (WLF Equation).

In the rubber composition for base tread of the present disclosure, the 0 °C tanδ/30 °C tanδ needs to be 2.90 or more. When the 0 °C tanδ/30 °C tanδ is less than 2.90, a sufficient frequency difference (temperature difference) cannot be obtained. As a result, when the rubber composition for base tread is applied to a tire, rolling resistance properties and reduction of pass-by noise cannot be achieved at the same time.

From the same viewpoint, the 0 °C tanδ/30 °C tanδ is preferably 3.00 or more and more preferably 3.1 or more. If the 0 °C tanδ/30 °C tanδ is too large, rolling resistance cannot be reduced sufficiently. Therefore, the 0 °C tanδ/30 °C tanδ is preferably 6.0 or less.

Note that the 0 °C tanδ and the 30 °C tanδ in the present disclosure are 0 °C tanδ and 30 °C tanδ after the vulcanization of the rubber composition for base tread of the present disclosure.

The 0 °C tanδ and the 30 °C tanδ can be measured, for example, using a spectrometer manufactured by Ueshima Seisakusho Co., Ltd. However, the method is not particularly limited as long as the value of each tanδ can be accurately obtained, and a commonly used measuring instrument can be used.

Further, during the measurement of the 0 °C tanδ and the 30 °C tanδ, the conditions of initial strain, dynamic strain and frequency may be, for example, initial strain of 2 %, dynamic strain of 1 %, and frequency of 10 Hz.

The 30 °C tanδ of the rubber composition for base tread of the present disclosure is not particularly limited as long as the above-mentioned relationship of 0 °C tanδ/30 °C tanδ can be satisfied. However, from the viewpoint of achieving even better rolling resistance properties and further improvement in pass-by noise at the same time when applying the rubber composition for base tread to a tire, it is preferably 0.075 to 0.220 and more preferably 0.100 to 0.170. When the 30 °C tanδ is 0.075 or more, the pass-by noise performance can be further improved. When the 30 °C tanδ is 0.220 or less, the rolling resistance can be further improved.

Further, the 0 °C tanδ of the rubber composition for base tread of the present disclosure is not particularly limited as long as the above-mentioned relationship of 0 °C tanδ/30 °C tanδ can be satisfied. However, from the viewpoint of achieving even better rolling resistance properties and further improvement in pass-by noise at the same time when applying the rubber composition for base tread to a tire, it is preferably 0.200 to 0.625 and more preferably 0.300 to 0.500. When the 0 °C tanδ is 0.200 or more, the pass-by noise performance can be further improved. When the 0 °C tanδ is 0.625 or less, the rolling resistance can be further improved.

The method for adjusting the value of 0 °C tanδ/30 °C tanδ is not particularly limited, and examples thereof include optimizing the constituent components of the rubber composition for base tread of the present disclosure. For example, it is possible to set the value of 0 °C tanδ/30 °C tanδ within the range of the present disclosure by limiting the type and content of rubber component or adjusting the type and content of filler, which will be described later.

The components constituting the rubber composition for base tread of the present disclosure are not particularly limited as long as they can satisfy the above-mentioned relationship of 0 °C tanδ/30 °C tanδ.

The type and content of rubber component and filler can be appropriately adjusted according to the performance required for the base tread.

The rubber component of the rubber composition for base tread of the present disclosure is not particularly limited. However, from the viewpoints of rendering it easy to satisfy the above-mentioned relationship of 0 °C tanδ/30 °C tanδ and being able to achieve even better rolling resistance properties and further improvement in pass-by noise at the same time when applying the rubber composition for base tread to a tire, it contains styrene-butadiene rubber (SBR) having a styrene content of 26 mass% or more. From the same viewpoint, the styrene content of the SBR is preferably 30 mass% or more and more preferably 39 mass% or more.

The styrene content of the SBR can be determined from the integration ratio of ¹H-NMR spectrum.

Further, from the viewpoint of being able to achieve even better rolling resistance properties and further improvement in pass-by noise at the same time when applying the rubber composition for base tread to a tire, the content of the styrene-butadiene rubber in the rubber component is preferably 10 mass% to 80 mass%, more preferably 15 mass% to 70 mass%, still more preferably 15 mass% to 60 mass%, and particularly preferably 20 mass% to 45 mass%. When the content of the styrene-butadiene rubber in the rubber component is 10 mass% or more, it is easy to satisfy the above-mentioned relationship of 0 °C tanδ/30 °C tanδ, and it is possible to achieve even better rolling resistance properties and further improvement in pass-by noise at the same time when applying the rubber composition for base tread to a tire.

The rubber components further contain natural rubber (NR) in addition to the SBR. In this case, it is easy to satisfy the above-mentioned relationship of 0 °C tanδ/30 °C tanδ, and it is possible to achieve even better rolling resistance properties and further improvement in pass-by noise at the same time when applying the rubber composition for base tread to a tire.

Further, the rubber components further contain butadiene rubber (BR) in addition to the SBR and the NR. In this case, it is possible to satisfy the above-mentioned relationship of 0 °C tanδ/30 °C tanδ and to achieve even better rolling resistance properties and further improvement in pass-by noise at the same time when applying the rubber composition for base tread to a tire.

Furthermore, from the viewpoint of more reliably achieving both rolling resistance properties and improvement in pass-by noise when applying the rubber composition for base tread to a tire, the rubber components preferably contain 10 mass% to 75 mass% of the natural rubber, 10 mass% to 75 mass% of the butadiene rubber, and 15 mass% to 60 mass% of the styrene-butadiene rubber, and the rubber components more preferably contain 20 mass% to 70 mass% of the natural rubber, 10 mass% to 70 mass% of the butadiene rubber, and 20 mass% to 45 mass% of the styrene-butadiene rubber.

The SBR, the NR, and the BR may be unmodified or modified.

The rubber components may also contain rubber other than the above-mentioned SBR, NR and BR (other rubber component), depending on the required performance. Examples of the other rubber component include diene-based rubber such as isoprene rubber (IR), styrene isoprene butadiene rubber (SIBR), chloroprene rubber (CR) and acrylonitrile butadiene rubber (NBR), and non-diene-based rubber such as ethylene propylene diene rubber (EPDM), ethylene propylene rubber (EPM) and butyl rubber (IIR).

Further, the presence/absence, content, type and the like of filler contained in the rubber composition for base tread of the present disclosure are not particularly limited and can be appropriately changed according to the required performance.

For example, carbon black, silica, other inorganic filler, and the like may be contained as the filler.

The type of the carbon black is not particularly limited and can be appropriately selected according to the required performance. Examples of the carbon black include those of FEF, SRF, HAF, ISAF, and SAF grades.

The content of the carbon black contained in the rubber composition for base tread of the present disclosure is preferably 25 parts by mass to 65 parts by mass and more preferably 30 parts by mass to 45 parts by mass with respect to 100 parts by mass of the rubber components. When the content of the carbon black is 25 parts by mass or more with respect to 100 parts by mass of the rubber components, even better reinforcing properties and crack resistance can be obtained. When the content of the carbon black is 45 parts by mass or less with respect to 100 parts by mass of the rubber components, the deterioration of low heat generating properties can be suppressed.

Examples of the type of the silica include wet silica, colloidal silica, calcium silicate, and aluminum silicate.

Among the above, the silica is preferably wet silica and more preferably precipitated silica. These silicas have high dispersibility, which can reduce the rolling resistance of a tire. The precipitated silica refers to silica obtained as a result of aggregating primary particles by, in an early stage of production, allowing a reaction solution to react in a relatively high temperature and in a neutral to alkaline pH range to make silica primary particles grow, and then controlling the pH range to acidic side.

Although silica is optional in the present disclosure, when silica is contained, the content of the silica is preferably 1 part by mass to 60 parts by mass with respect to 100 parts by mass of the rubber component. When the content of the silica is 1 part by mass or more with respect to 100 parts by mass of the rubber components, the rolling resistance can be further reduced. When the content of the silica is 60 parts by mass or less with respect to 100 parts by mass of the rubber components, deterioration of processability can be suppressed.

Examples of the other inorganic filler include alumina (Al₂O₃) such as γ-alumina and α-alumina, alumina hydrate (Al₂O₃·H₂O) such as boehmite and diaspore, aluminum hydroxide [Al(OH)₃] such as gibbsite and bayerite, aluminum carbonate [Al₂(CO₃)₃], magnesium hydroxide [Mg(OH)₂], magnesium oxide (MgO), magnesium carbonate (MgCO₃), talc (3MgO·4SiO₂· H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, etc.), magnesium silicate (Mg₂SiO₄, MgSiO₃, etc.), calcium silicate (Ca₂SiO₄, etc.), aluminum calcium silicate (Al₂O₃·CaO·2SiO₂, etc.), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂]^{,} various zeolites, and other crystalline aluminosilicates containing hydrogen, alkali metals or alkaline earth metals that correct the charge.

The rubber composition of the present disclosure may also contain a resin.

Examples of the resin include C5-based resin, C5/C9-based resin, C9-based resin, phenol resin, terpene-based resin, and terpene-aromatic compound-based resin. These resins may be used alone or in combination of two or more.

The rubber composition for base tread of the present disclosure may contain other components in addition to the above-mentioned rubber components and filler as long as the effect of the present disclosure is not impaired.

Examples of the other components include additives commonly used in the rubber industry such as a silane coupling agent, a softener, stearic acid, an age resistor, a vulcanizing agent (sulfur), a vulcanization accelerator, and a vulcanization acceleration aid, which can be contained as appropriate.

When the rubber composition for base tread of the present disclosure contains silica as the filler, it is preferable to further contain a silane coupling agent. This is because the effects of reinforcing properties and low heat generation properties can be further improved by silica in this way. A known silane coupling agent may be appropriately used.

A known age resistor may be used as the age resistor, which is not particularly limited. Examples thereof include a phenol-based age resistor, an imidazole-based age resistor, and an amine-based age resistor. These age resistors may be used alone or in combination of two or more.

A known vulcanization accelerator may be used as the vulcanization accelerator, which is not particularly limited. Examples thereof include thiazole-based vulcanization accelerators such as 2-mercaptobenzothiazole and dibenzothiazyl disulfide; sulfenamide-based vulcanization accelerators such as N-cyclohexyl-2-benzothiazylsulfenamide and N-t-butyl-2-benzothiazylsulfenamide; guanidine-based vulcanization accelerators such as diphenylguanidine (1,3-diphenylguanidine, etc.); thiuram-based vulcanization accelerators such as tetramethyl thiuram disulfide, tetraethyl thiuram disulfide, tetrabutyl thiuram disulfide, tetradodecyl thiuram disulfide, tetraoctyl thiuram disulfide, tetrabenzyl thiuram disulfide, and dipentamethylene thiuram tetrasulfide; dithiocarbamate-based vulcanization accelerators such as zinc dimethyldithiocarbamate; and zinc dialkyldithiophosphate.

Examples of the vulcanization acceleration aid include zinc oxide (ZnO) and fatty acid. The fatty acid may be saturated or unsaturated, linear or branched, and the number of carbon atoms of the fatty acid is not particularly limited. Examples thereof include fatty acids having 1 to 30 carbon atoms and preferably fatty acids having 15 to 30 carbon atoms, more specifically, naphthenic acid such as cyclohexane acid (cyclohexanecarboxylic acid) and alkylcyclopentane with side chains; saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linoleic acid and linolenic acid; and resin acids such as rosin, tall oil acid and abietic acid. These may be used alone or in combination of two or more. In the present disclosure, zinc oxide and stearic acid can be preferably used.

### <Tire>

The tire of the present disclosure uses the rubber composition for base tread of the present disclosure described above in a base tread of a tread portion.

By using the rubber composition for base tread of the present disclosure as the base tread, it is possible to improve the rolling resistance properties and improve the pass-by noise.

In the tread portion of the tire of the present disclosure, the configuration of a cap tread formed on the base tread is not particularly limited. A known cap tread can be appropriately used depending on the performance required for the tire.

The rubber composition constituting the cap tread may contain, for example, a rubber component, a reinforcing filler, a softener, and an additive commonly used in the rubber industry.

From the viewpoint of further improving the balance between rolling resistance properties and pass-by noise of the tire, the cap tread is formed on the base tread of the tread portion of the tire of the present disclosure, and a ratio of the storage modulus E'c of the cap tread to the storage modulus E'b of the base tread (E'c/ E'b) is preferably 0.25 to 0.75 and more preferably 0.30 to 0.70.

Depending on the type of tire to be used, the tire of the present disclosure may use an unvulcanized rubber composition and be vulcanized after molding, or the tire of the present invention may be produced by molding using a semi-vulcanized rubber that has been subjected to a preliminary vulcanization process or the like, and then further performing main vulcanization.

Further, the tire of the present disclosure is preferably a pneumatic tire. The gas to be filled in the pneumatic tire may be normal air or air whose oxygen partial pressure has been adjusted, and an inert gas such as nitrogen, argon and helium.

The tire of the present disclosure can be used as a tire for various vehicles, and it is preferably used as a tire for passenger vehicles or a tire for trucks and buses. This is because the benefits of achieving both reduction in rolling resistance and improvement in pass-by noise can be further enjoyed in this way.

### EXAMPLES

The following describes the present disclosure in more detail with reference to Examples. Note that the present disclosure is not limited to the following Examples.

### <Example 1 and Comparative Examples 1 and 2>

Rubber compositions for base tread A to C were prepared using a normal Banbury mixer according to the formulation listed in Table 1. The blending amount of each component listed in Table 1 is an amount (parts by mass) with respect to 100 parts by mass of the rubber components.

The obtained rubber compositions for base tread A to C were subjected to vulcanization at 160 °C for 15 minutes, and the loss tangent (tanδ) and the storage modulus (E') at 0 °C and 30 °C of the obtained vulcanized rubber were measured under conditions of initial strain of 2 %, dynamic strain of 1 % and frequency of 10 Hz using a spectrometer manufactured by Ueshima Seisakusho Co., Ltd. Table 2 lists the measured tanδ and E' at 0 °C and 30 °C and the calculated 0 °C tanδ/30 °C tanδ.

**[Table 1]**

| Rubber composition for base rubber | A | B | C |
|---|---|---|---|
| Natural rubber | 85 | 15.2 | 55 |
| Butadiene rubber *1 | 15 | - | 15 |
| Styrene-butadiene rubber 1 *2 | - | 48.6 | - |
| Styrene-butadiene rubber 2 *3 | - | - | 30(41.25) |
| Styrene-butadiene rubber 3 *4 | - | 36.2(49.8) | - |
| Carbon black 1 *5 | 40 | - | 40 |
| Carbon black 2 *6 | - | 54 | - |
| Stearic acid | 2 | 2 | 2 |
| Age resistor *7 | 1 | 1 | 1 |
| Zinc oxide *8 | 1 | 1 | 1 |
| Vulcanization accelerator 9 | 1 | 1 | 1 |
| Sulfur | 0.5 | 0.5 | 0.5 |

| | | | |
|---|---|---|---|
| *1 "BR01" manufactured by JSR Corporation *2 "SL563" manufactured by JSR Corporation, styrene content: 20 mass% *3 "HP755B" manufactured by JSR Corporation, styrene content: 40 mass%, the values in parentheses in Table 1 are the blending amount (parts by mass) as oil extended rubber *4 "0122" manufactured by JSR Corporation, styrene content: 38 mass%, the values in parentheses in Table 1 are the blending amount (parts by mass) as oil extended rubber *5 "Asahi # 65" manufactured by Asahi Carbon Co., Ltd. *6 "Asahi # 70" manufactured by Asahi Carbon Co., Ltd. *7 N-(1,3-dimethylbutyl)-N'-phenyl-p-phenylenediamine, "NOCRAC 6C" manufactured by Ouchi Shinko Chemical Industrial Co., Ltd. *8 "Hakusui Tech" manufactured by Kyushu Hakusui *9 Dibenzothiazyl disulfide, "NOCCELER DM-P" manufactured by Ouchi Shinko Chemical Industrial Co., Ltd. | | | |

Then, each of the obtained rubber composition for base tread was used for a base tread of a tread portion to prepare a sample of a pneumatic radial tire for passenger vehicles having a size of 205/55R16. With respect to the conditions of the tread portion, all the samples were prepared under the same conditions except for the storage modulus of cap tread listed in Table 2.

### <Evaluation>

The obtained rubber compositions for base tread and tire samples were evaluated with the following methods. The results are listed in Table 2.

### (1) Rolling resistance

The rolling resistance coefficient (RRC) of each sample tire was measured in accordance with the international standard (ECE R117).

The evaluation was indicated in an index obtained by taking the reciprocal of the measured RRC, with the reciprocal of the RRC of Comparative Example 1 being 100. The larger the index value is, the better the rolling resistance properties are (the more the rolling resistance is reduced). The evaluation results are listed in Table 2.

### (2) Pass-by noise level

The pass-by noise (dB) of each sample tire was measured in accordance with the international standard (ECE R117).

For the evaluation, the difference in level between the noise (dB) of each sample and the pass-by noise (dB) of Comparative Example 1 was calculated and taken as the pass-by noise level. The smaller the pass-by noise level is, the more the pass-by noise is reduced. The evaluation results are listed in Table 2.

**[Table 2]**

| | | Comparative Example 1 | Comparative Example 2 | Example 1 |
|---|---|---|---|---|
| Physical properties of base tread | Rubber composition for base rubber | A | B | C |
| | 0 °C tanδ | 0.172 | 0.644 | 0.457 |
| | 30 °C tanδ | 0.073 | 0.227 | 0.137 |
| | 0 °C tanδ/30 °C tanδ | 2.37 | 2.83 | 3.33 |
| | E'b | 10.0 | 10.0 | 10.0 |
| Physical properties of cap tread | E'c | 4.3 | 9.8 | 4.1 |
| E'c/E'b | | 0.43 | 0.98 | 0.41 |
| Evaluation | Rolling resistance (the larger, the better) | 100 | 96 | 101 |
| | Pass-by noise level (the smaller, the better) | Standard | -0.9 dB | -0.7 dB |

From the results in Table 2, it was found that the sample of Example 1 had well-balanced and excellent effects in terms of rolling resistance properties and pass-by noise level, as compared with the sample of each comparative example.

In addition, the samples of Comparative Examples had inferior result in terms of at least one of the aforementioned evaluation terms, as compared with the sample of Example 1.

### INDUSTRIAL APPLICABILITY

According to the present disclosure, it is possible to provide a rubber composition for base tread which is excellent in rolling resistance properties and can improve pass-by noise when applying the rubber composition for base tread to a tire. Further, according to the present disclosure, it is possible to provide a tire which is excellent in rolling resistance properties and can improve pass-by noise.

## Claims

1. A rubber composition for a base tread of a tread portion of a tire, wherein
a ratio of tanδ at 0 °C, which is expressed as 0 °C tanδ, to tanδ at 30 °C, which is expressed as 30 °C tanδ, is 2.90 or more, where the ratio is expressed as 0 °C tanδ/30 °C tanδ,
wherein the conditions during the measurement of the 0 °C tanδ and the 30 °C tanδ are initial strain of 2%, dynamic strain of 1% and frequency of 10 Hz,
wherein a rubber component in the rubber composition comprises styrene-butadiene rubber having a styrene content of 26 mass% or more, natural rubber and butadiene rubber.

2. The rubber composition for base tread according to claim **1,** wherein the 0 °C tanδ/30 °C tanδ is 3.00 or more.

3. The rubber composition for base tread according to claim 1 or 2, wherein the 30 °C tanδ is 0.075 to 0.220.

4. The rubber composition for base tread according to any one of claims 1 to 3, wherein the 0 °C tanδ is 0.200 to 0.625.

5. The rubber composition for base tread according to any one of claims 1 to 4, wherein the styrene content of the styrene-butadiene rubber is 39 mass% or more.

6. The rubber composition for base tread according to any one of claims 1 to 5, wherein a content of the styrene-butadiene rubber in the rubber component is 10 mass% to 80 mass%.

7. The rubber composition for base tread according to claim 6, wherein a content of the styrene-butadiene rubber in the rubber component is 15 mass% to 60 mass%.

8. The rubber composition for base tread according to claim 7, wherein a content of the styrene-butadiene rubber in the rubber component is 20 mass% to 45 mass%.

9. The rubber composition for base tread according to any one of claims 1 to 5, wherein the rubber component comprises 10 mass% to 75 mass% of the natural rubber and 10 mass% to 75 mass% of the butadiene rubber.

10. The rubber composition for base tread according to claim 9, wherein the rubber component comprises 20 mass% to 70 mass% of the natural rubber and 10 mass% to 70 mass% of the butadiene rubber.

11. A tire using the rubber composition for base tread according to any one of claims 1 to 10 for a base tread of a tread portion.

12. The tire according to claim 11, wherein a cap tread is formed on the base tread in the tread portion of the tire, and a ratio of the storage modulus E'c of the cap tread to the storage modulus E'b of the base tread, which is expressed as E'c/ E'b, is 0.25 to 0.75.

## Patentansprüche

1. Kautschukzusammensetzung für eine Basislauffläche eines Laufflächenabschnitts eines Reifens, wobei
das Verhältnis von tanδ bei 0 °C, ausgedrückt als 0 °C tanδ, zu tanδ bei 30 °C, ausgedrückt als 30 °C tanδ, 2,90 oder mehr beträgt, wobei das Verhältnis als 0 °C tanδ/30 °C tanδ ausgedrückt wird,
wobei die Bedingungen während der Messung der 0 °C tanδ-Wert und der 30 °C tanδ-Wert eine Anfangsdehnung von 2%, eine dynamische Dehnung von 1% und eine Frequenz von 10 Hz sind,
wobei eine Kautschukkomponente in der Kautschukzusammensetzung Styrol-Butadien-Kautschuk, der ein Styrolgehalt von 26 Masse-% oder mehr aufweist, Naturkautschuk und Butadien-Kautschuk, umfasst.

2. Kautschukzusammensetzung für Basislauffläche nach Anspruch 1, wobei der 0 °C tanδ-Wert/30 °C tanδ-Wert 3,00 oder mehr beträgt.

3. Kautschukzusammensetzung für Basislauffläche nach Anspruch 1 oder 2, wobei der 30 °C tanδ-Wert 0,075 bis 0,220 beträgt.

4. Kautschukzusammensetzung für Basislauffläche nach einem der Ansprüche 1 bis 3, wobei der 0 °C tanδ-Wert 0,200 bis 0,625 beträgt.

5. Kautschukzusammensetzung für Basislauffläche nach einem der Ansprüche 1 bis 4, wobei der Styrolgehalt des Styrol-Butadien-Kautschuks 39 Masse-% oder mehr beträgt.

6. Kautschukzusammensetzung für Basislauffläche nach einem der Ansprüche 1 bis 5, wobei ein Gehalt an Styrol-Butadien-Kautschuk in der Kautschukkomponente 10 Masse% bis 80 Masse-% beträgt.

7. Kautschukzusammensetzung für Basislauffläche nach Anspruch 6, wobei ein Gehalt an Styrol-Butadien-Kautschuk in der Kautschukkomponente 15 Masse-% bis 60 Masse-% beträgt.

8. Kautschukzusammensetzung für Basislauffläche nach Anspruch 7, wobei ein Gehalt an Styrol-Butadien-Kautschuk in der Kautschukkomponente 20 Masse-% bis 45 Masse-% beträgt.

9. Kautschukzusammensetzung für Basislauffläche nach einem der Ansprüche 1 bis 5, wobei die Kautschukkomponente 10 Masse-% bis 75 Masse-% Naturkautschuk und 10 Masse-% bis 75 Masse-% Butadien-Kautschuk umfasst.

10. Kautschukzusammensetzung für Basislauffläche nach Anspruch 9, wobei die Kautschukkomponente 20 Masse-% bis 70 Masse-% Naturkautschuk und 10 Masse-% bis 70 Masse-% Butadien-Kautschuk umfasst.

11. Reifen, bei dem die Kautschukzusammensetzung für Basislauffläche nach einem der Ansprüche 1 bis 10 für eine Basislauffläche eines Laufflächenabschnitts verwendet wird.

12. Reifen nach Anspruch 11, wobei auf der Basislauffläche eine Kronenlauffläche im Laufflächenabschnitt des Reifens ausgebildet ist und das Verhältnis des Speichermoduls E'c der Kronenlauffläche zum Speichermodul E'b der Basislauffläche, ausgedrückt als E'c/E'b, 0,25 bis 0,75 beträgt.

## Revendications

1. Composition de caoutchouc pour une bande de roulement d'un pneumatique, dans laquelle
un rapport de tanδ à 0 °C, exprimé par 0 °C tanδ, à tanδ à 30 °C, exprimé par 30 °C tanδ, est supérieur ou égal à 2,90, le rapport étant exprimé par 0 °C tanδ/30 °C tanδ,
dans laquelle les conditions lors de la mesure de 0 °C tanδ et30 °C tanδ sont une déformation initiale de 2 %, déformation dynamique de 1 % et une fréquence de 10 Hz,
dans lequel un composant de caoutchouc de la composition de caoutchouc comprend du caoutchouc styrène-butadiène présentant une teneur en styrène de 26 % en masse ou plus, du caoutchouc naturel et du caoutchouc butadiène.

2. Composition de caoutchouc pour bande de roulement de base selon la revendication 1, dans laquelle le 0 °C tanδ/30 °C tanδ est de 3 ou plus.

3. Composition de caoutchouc pour bande de roulement de base selon la revendication 1 ou 2, dans laquelle le 30 °C tanδ est de 0,075 à 0,220.

4. Composition de caoutchouc pour bande de roulement de base selon l'une quelconque des revendications 1 à 3, dans laquelle le 0 °C tanδ est de 0,200 à 0,625.

5. Composition de caoutchouc pour bande de roulement de base selon l'une quelconque des revendications 1 à 4, dans laquelle la teneur en styrène du caoutchouc styrène-butadiène est de 39 % en masse ou plus.

6. Composition de caoutchouc pour bande de roulement de base selon l'une quelconque des revendications 1 à 5, dans laquelle une teneur du caoutchouc styrène-butadiène dans le composant de caoutchouc est de 10 % en masse à 80 % en masse.

7. Composition de caoutchouc pour bande de roulement de base selon la revendication 6, dans laquelle une teneur du caoutchouc styrène-butadiène dans le composant de caoutchouc est de 15 % en masse à 60 % en masse.

8. Composition de caoutchouc pour bande de roulement de base selon la revendication 7, dans laquelle une teneur du caoutchouc styrène-butadiène dans le composant de caoutchouc est de 20 % en masse à 45 % en masse.

9. Composition de caoutchouc pour bande de roulement de base selon l'une quelconque des revendications 1 à 5, dans laquelle le composant de caoutchouc comprend de 10 % en masse à 75 % en masse du caoutchouc naturel et de 10 % en masse à 75 % en masse du caoutchouc butadiène.

10. Composition de caoutchouc pour bande de roulement de base selon la revendication 9, dans laquelle le composant de caoutchouc comprend de 20 % en masse à 70 % en masse de caoutchouc naturel et de 10 % en masse à 70 % en masse de caoutchouc butadiène.

11. Pneumatique utilisant la composition de caoutchouc pour bande de roulement de base selon l'une quelconque des revendications 1 à 10 pour une bande de roulement de base d'une portion de bande de roulement.

12. Pneumatique selon la revendication 11, dans lequel une bande de roulement de recouvrement est formée sur la bande de roulement de base dans la partie de bande de roulement du pneu du pneumatique, et un rapport du module de stockage E'c de la bande de roulement de recouvrement au module de stockage E'b de la bande de roulement de base, qui est exprimé par E'c/ E'b, est de 0,25 à 0,75.
